# EUROPEAN PATENT SPECIFICATION

(11) **EP 3 640 167 B1**
(45) Date of publication and mention of the grant of the patent: **04.06.2025**
(21) Application number: 19000409.3
(22) Date of filing: 13.09.2019
(51) Int. Cl.: B65G 49/06

(54) **SEPARATING APPARATUS FOR GLASS SLABS AND RELATED PROCESS OF USE**
TRENNVORRICHTUNG FÜR GLASPLATTEN UND ZUGEHÖRIGES VERFAHREN ZUR VERWENDUNG
APPAREIL DE SÉPARATION DE PLAQUES DE VERRE ET PROCÉDÉ D'UTILISATION ASSOCIÉ

(30) Priority: 18.10.2018 IT 201800009587
(43) Date of publication of application: 22.04.2020
(73) Proprietor: Bavelloni S.p.A., 20823 Lentate sul Seveso (MB) (IT)
(72) Inventor: Gariglio, Davide, I-10040 Volvera (TO) (IT)
(74) Representative: Buzzi, Notaro & Antonielli d'Oulx S.p.A.

(56) References cited:
- BE-A- 653 633
- FR-A- 1 565 234
- FR-A5- 2 178 572
- GB-A- 2 263 252
- JP-A- 2004 182 381
- KR-A- 20090 090 886
- US-A- 4 748 310
- US-A1- 2014 196 402

## Description

The present invention refers to a separating apparatus for glass slabs used to separate glass slabs with a wire during their storage, mutually abutted, on a suitable storage warehouse, and to its related process.

In particular, the invention refers to a separating apparatus for glass slabs which can be assembled on a rack for storing slabs, or be independent and self-carrying, configured to insert a wire or a plurality of wires between two adjacent glass slabs during the storage of the slabs on the rack, mutually abutted, to store them by keeping them separated according to claim 1.

It is known in the art to use spacer materials to separate glass slabs which are stored mutually abutted on racks, to solve the problem of damaging the glass slabs due to scoring which are generated after a slithering of the slabs when they are laid and returned on the racks or during their handling on transport means.

Such known spacer materials are for example sheets of paper, adhesive spacers made of cork or grommets glued onto the glasses, and have several problems: the connection/disconnection of spacer materials cannot be automated and slows down the storage operations; the spacer materials can be reused with difficulty because they could have deteriorated during the transport of the pack of slabs or their detachment from the slab, and can leave residues to be cleaned on the glass slabs. A human intervention is therefore required for checking and possibly cleaning the slabs before the following operation (silk screening, tempering, etc.).

Object of the present invention is solving the above prior art problems by providing a separating apparatus for glass slabs capable of using a spacing wire or a plurality of wires to mutually separate glass slabs stored as mutually abutted, allowing to automate the operation of inserting the wires between the slabs, speeding up their storage and allowing to recover the wire when discharging the slabs for their following re-use.

Other objects of the present invention are providing a separating apparatus for glass slabs which allows storing glass slabs separated by a spacing wire or a plurality of wires, in order not to leave on the slabs residues of the spacing material; the slab-separating apparatus of the invention can further be moved in front of other machines for following workings.

A further object of the present invention is providing a process of separating glass slabs, performed with the separating apparatus for glass slabs of the invention.

The above and other objects and advantages of the invention, as will appear from the following description, are obtained with a separating apparatus for glass slabs and a process as claimed in the respective independent claims 1 and 5. Preferred embodiments and non-trivial variations of the present invention are the subject matter of the dependent claims.

It is intended that all enclosed claims are an integral part of the present description.

The present invention will be better described by some preferred embodiments thereof, provided as a non-limiting example, with reference to the enclosed drawings, in which:

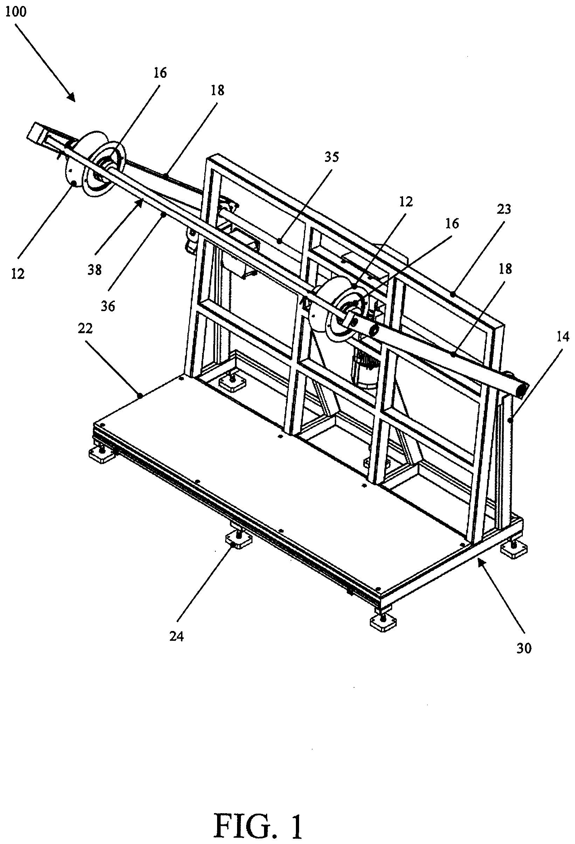

- Figure 1 is a perspective view of a separating apparatus for glass slabs according to the present invention;

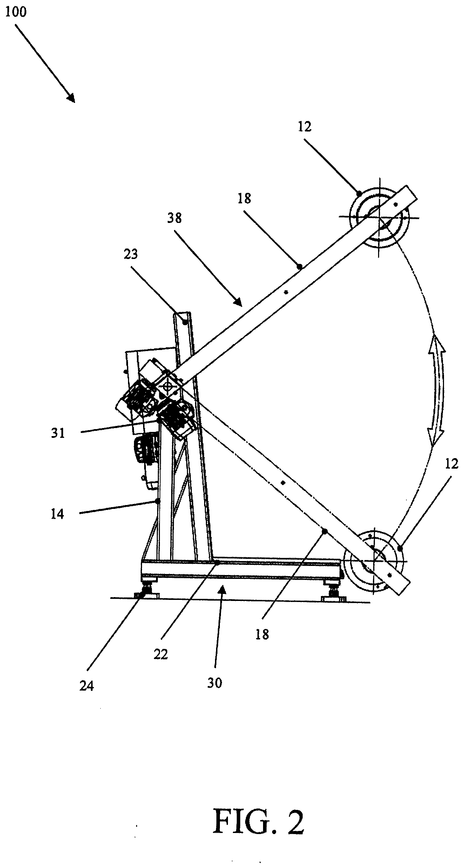

- Figure 2 is a side view in two operating configurations of a separating apparatus for glass slabs according to the present invention;

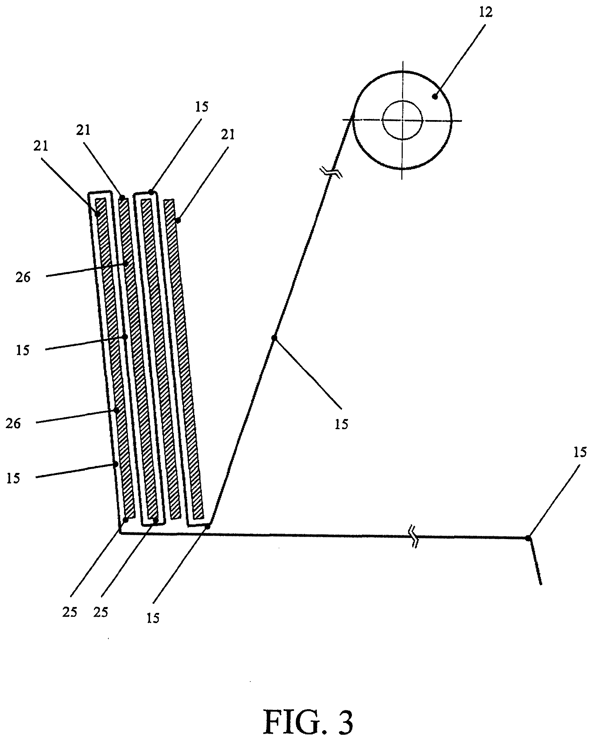

- Figure 3 is a schematic view of the placement of a spacing wire with a separating apparatus for glass slabs according to the present invention; and
- Figure 4 is a view of a series of operating states of a separating apparatus for glass slabs according to the present invention.

With reference to the Figures, a preferred embodiment of the separating apparatus for glass slabs of the present invention is shown and described.

The separating apparatus 100 for glass slabs of the invention comprises a supporting structure 14, winding/unwinding means 12 of a spacing wire 15 of the glass slabs 21, and fastening means 27 of an end of the spacing wire 15.

The separating apparatus 100 for glass slabs of the invention further comprises lifting means 38 connected to the supporting structure 14 and to the winding/unwinding means 12 and configured for lifting/lowering the winding/unwinding means 12 between a lower position and an upper position, and actuating means 31 controlled by a control system and configured for actuating the winding/unwinding means 12 and the lifting means 38 in order to keep the spacing wire 15 taut between the fastening means 27 and the winding/unwinding means 12, and in contact with the glass slab 21 during the storage operations of the mutually abutted glass slabs 21, to allow storing them separated by at least one spacing wire 15 interposed between two adjacent glass slabs 21; preferably, the winding/unwinding means 12 and the lifting means 38 are configured to store the glass slabs 21 mutually separated by at least one or more spacing wires 15 interposed between two adjacent glass slabs 21.

According to the invention, the separating apparatus 100 comprises clutching means 16 associated with the winding/unwinding means 12 and designed to allow the recovery of the spacing wire 15 during its rewinding.

In a preferred way, the supporting structure 14 is associated with a base support 22 configured to support the glass slabs 21 abutted thereon, and the end of the spacing wire 15 is fastened by the fastening means 27 to the base support 22, in order to keep the spacing wire 15 taut between the base support 22 and the winding/unwinding means 12, before loading the first slab 21 on the base support 22, as will be explained below in more detail.

In particular, the invention refers to a separating apparatus 100 for glass slabs which can be assembled on a rack 30 for storing slabs comprising the base support 22 and a side support 23, on which the glass slabs 21 are stored, with an edge 25 abutted onto the base support 22 and a surface 26 abutted onto the side support 23 or onto the surface of an adjacent slab 21, with the spacing wire 15 interposed between the slabs 21 or between the slab 21 and the side support 23; alternatively, the separating apparatus 100 for glass slabs of the invention can be independent and self-carrying.

The separating apparatus 100 for glass slabs can be rested on supporting feet 24 or on wheels, both in the configuration where it is assembled on the rack 30 for storing slabs, and in the self-carrying configuration, fastened to the ground or moved on the wheels or through the help of transport means in front of other machinery for following workings of the slabs 21.

In a preferred embodiment of the separating apparatus 100 for glass slabs of the invention, the winding/unwinding means 12 are reels 12 rotating connected to the lifting means 38, and the clutching means 16 comprise a clutch of a known type connected to the reel 12 and configured for recovering the spacing wire 15 during its rewinding; preferably, the winding/unwinding means 12 are composed of at least one reel 12, on each of which a spacing wire 15 is wound; the rotation of the reel 12 for the automatic rewinding of the wire 15 is controlled by the control system, depending on height and width of the glass slab 21 and/or of the diameter of the winding coil of the wire 15 on the reel 12, through sensors of a known type associated with the reel 12 or through electronic measuring systems, such as for example a brushless motor or an encoder.

Preferably, the lifting means 38 are composed of an oscillating support 38 comprising two arms 18 connected by a first rotation shaft 35 of the support 38 and by a second rotation shaft 36 of the reels 12; said shafts 35, 36 being transverse, preferably perpendicular, to the arms 18.

In a preferred way, the actuating means 31 comprise an electric motor 31 connected through motion transmission means of a known type, for example kinematisms or chains, to the first rotation shaft 35 of the support 38 and to the second rotation shaft 36 of the reels 12.

Preferably, the control system comprises an electronic drive and control unit of a known type, comprising a microcontroller to control the actuating means 31, the winding/unwinding means 12, the lifting means 38 through the sensors or the electronic measuring systems and a managing software.

The separating apparatus 100 for glass slabs can further be connected to a source of energy and to a data transmission network, for example of the Wi-Fi (or Bluetooth) type, to download all data about the glass slabs 21 present on the storage rack 30, and keep trace of the type of stored slabs 21.

Preferably, the spacing wire 15 has a diameter included between 2 mm and 6 mm, is made of plastic material, for example multi-filament polypropylene PPM with a diameter of 4 mm; the spacing wire 15 can have any diameter and/or material upon the user's choice.

In a known way, the glass slabs 21 are loaded or unloaded from an external warehouse to the apparatus 100 by means of a slab loading/unloading system, for example comprising a manipulator with a system of suckers, or manually.

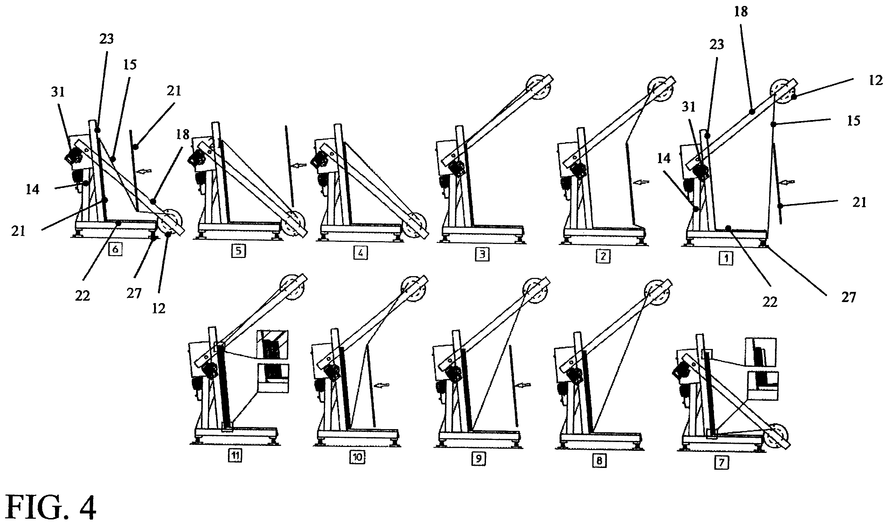

Figure 4 shows the operating steps of the separating apparatus 100 for glass slabs according to the present invention, which occur under the control of the electronic drive and control unit.

In a first step of the process, designated with references 1, 2 and 3 in Figure 4, the winding/unwinding means 12 are lifted by the actuating means 31 in an upper position, which allows passing the glass slab 21 to be stored below the winding/unwinding means 12 during its loading operations, while the spacing wire 15 is kept taut between the fastening means 27 and the winding/unwinding means 12, and in contact with the glass slab 21, till the first glass slab 21 is stored.

In the embodiment of the separating apparatus 100 for glass slabs of the invention comprising the winding/unwinding means 12 composed of two reels 12 collected rotating to the oscillating support 38, on each of which a spacing wire 15 is wound, and the rack 30 for storing slabs comprising the base support 22 and the side support 23, the first step of the process comprises: a sub-step 1, wherein the reels 12 are lowered by the actuating means 31 in the lower position and the glass slab 21 to be stored is moved towards the rack 30 for storing slabs, through the slab loading/unloading system, or manually, till one gets in contact with the two spacing wires 15 taut between the fastening means 27 and the respective reels 12; a sub-step 2, wherein the glass slab 21 to be stored is moved towards the side support 23 keeping the two spacing wires 15 in contact with the glass slab 21, in a preferred way against the surface 26 of the glass slab 21, in order to unwind the wires 15 due to the action of the clutch connected to the reel 12; a sub-step 3, wherein the glass slab 21 to be stored is loaded on the rack 30 abutted onto the base support 22 and onto the side support 23, preferably with its edge 25 rested on the base support 22 and its surface 26 rested onto the side support 23, keeping the two spacing wires 15 interposed between the glass slab 21 and the base support 22 and the side support 23.

In a second step of the process, designated with references 4, 5, 6 and 7 in Figure 4, the winding/unwinding means 12 are lowered by the actuating means 31 in a lower position, which allows passing the glass slab 21 to be stored above the winding/unwinding means 12 during its storage operations, while the spacing wire 15 is kept taut between the first loaded glass slab 21 and the winding/unwinding means 12, and in contact with the second glass slab 21 to be loaded, till the second glass slab 21 is stored with the spacing wire 15 interposed between the glass slabs 21.

In the embodiment of the separating apparatus 100 for glass slabs of the invention, comprising the winding/unwinding means 12 composed of two reels 12 connected rotating to the oscillating support 38, on each of which a spacing wire 15 is wound, and the rack 30 for storing slabs comprising the base support 22 and the side support 23, the second step of the process comprises: a sub-step 4, wherein the reels 12 are lowered by the actuating means 31 in the lower position; a sub-step 5 wherein the glass slab 21 to be stored is moved towards the rack 30 for storing slabs, through the slab loading/unloading system or manually, till one gets in contact with the two spacing wires 15 taut between the first stored glass slab 21 and the respective reels 12; a sub-step 6, wherein the glass slab 21 to be stored is moved towards the side support 23 keeping the two spacing wires 15 in contact with the glass slab 21 to be stored, in a preferred way against its edge 25, in order to unwind the wires 15 due to the action of the clutch connected to the reel 12; a sub-step 7, wherein the glass slab 21 to be stored is loaded on the rack 30 with its edge 25 rested on the base support 22, and the glass slab 21 to be stored, preferably its surface 26, abutted onto the first stored glass slab 21, keeping the two spacing wires 15 interposed between the glass slabs 21 and the base support 22 and the side support 23, and between the adjacent glass slabs 21.

In a third step of the process, designated with references 8, 9, 10 and 11 in Figure 4, the winding/unwinding means 12 are lifted by the actuating means 31 in an upper position, which allows passing the glass slab 21 to be stored below the winding/unwinding means 12 during its storage operations, while the spacing wire 15 is kept taut between the glass slab 21 loaded in the previous step and the winding/unwinding means 12, and in contact with the glass slab 21 to be loaded, till this glass slab 21 is stored with the spacing wire 15 interposed between the glass slabs 21.

In the embodiment of the separating apparatus 100 for glass slabs of the invention comprising the winding/unwinding means 12 composed of two reels 12 connected rotating to the oscillating support 38, on each of which a spacing wire 15 is wound, and the rack 30 for storing slabs comprising the base support 22 and the side support 23, the third step of the process comprises: a sub-step 8, wherein the reels 12 are lifted by the actuating means 31 in the upper position; a sub-step 9 wherein the glass slab 21 to be stored is moved towards the rack 30 for storing slabs, through the slab loading/unloading system or manually, till one gets in contact with the two spacing wires 15 taut between the glass slab 21 stored in the previous step and the respective reels 12; a sub-step 10, wherein the glass slab 21 to be stored is moved towards the side support 23 keeping the two spacing wires 15 in contact with the glass slab 21 to be stored, in a preferred way against its edge 25, in order to unwind the wires 15 due to the action of the clutch connected to the reel 12; a sub-step 11, wherein the glass slab 21 to be stored is loaded on the rack 30 abutted onto the base support 22, preferably with its edge 25, and abutted onto the stored glass slab 21, keeping the two spacing wires 15 interposed between the glass slabs 21 and the base support 22 and the side support 23, and between the adjacent glass slabs 21.

The process further comprises the following steps, in which the second step and the third step are alternated till the end of the loading operations of the glass slabs 21.

The separating apparatus for glass slabs 100 and the related process have the following advantages: automating the slab separation process, which does not require the help of an operator both when depositing and when withdrawing the slabs; recovery of the spacing material which is automatically re-wound at every step of unloading the slabs, with consequent time saving by the operator; absence of residuals of the spacing material on the slabs; the operation of inserting the spacing material is very quick with respect to the other systems; the separating apparatus for glass slabs is designed to be used both in case of movements of the rack loaded with slabs inside a factory, and for on-road transports, protecting the slabs from damages caused by vibrations generated during the transport; the separating apparatus for glass slabs of the invention, both on a rack and on a stand-alone structure; the apparatus can be moved on wheels or through the help of transport means (for example a forklift) in front of other machinery for following workings, or can be connected to a data network to download all data about glasses present on the rack, allowing to keep track of the types of glasses to be unloaded.

## Claims

1. Separating apparatus (100) for glass slabs comprising:
- a supporting structure (14),
- winding/unwinding means (12) of a spacing wire (15) for spacing the glass slabs (21),
- lifting means (38) connected to the supporting structure (14) and to the winding/unwinding means (12) and configured for lifting/lowering the winding/unwinding means (12) between a lower position and an upper position, in order to keep the spacing wire (15) in contact with a glass slab (21) during the storage operations of mutually abutted glass slabs (21), to allow storing them separated by at least one spacing wire (15) interposed between two adjacent glass slabs (21),
wherein the winding/unwinding means (12) are composed of at least one reel (12) rotatably connected to the lifting means (38); and
wherein the lifting means (38) are composed of an oscillating support (38) comprising two arms (18) connected by a first rotation shaft (35) of the support (38) and by a second rotation shaft (36) of the reels (12), said shafts (35, 36) being transverse to the arms (18),
said separating apparatus being **characterized in that** it comprises:
- fastening means (27) of an end of the spacing wire (15),
- actuating means (31) controlled by a control system and configured for actuating the winding/unwinding means (12) and the lifting means (38) in order to keep the spacing wire (15) taut between the fastening means (27) and the winding/unwinding means (12), and
- clutching means (16) associated with the winding/unwinding means (12) and designed to allow the recovery of the spacing wire (15) during its rewinding, the clutching means comprising a clutch connected to the reel (12) and configured for recovering of the spacing wire (15) during its rewinding.

2. Separating apparatus (100) for glass slabs according to claim 1, **characterized in that** the winding/unwinding means (12) and the lifting means (38) are configured to store the glass slabs (21) mutually separated by two spacing wires (15) interposed between two adjacent glass slabs (21).

3. Separating apparatus (100) for glass slabs according to claim 1 or 2, **characterized in that** the supporting structure (14) is associated with a base support (22) configured to support the glass slabs (21) abutted thereon, and the end of the spacing wire (15) is fastened by the fastening means (27) to the base support (22), in order to keep the spacing wire (15) taut between the base support (22) and the winding/unwinding means (12), before loading the first slab (21) on the base support (22).

4. Separating apparatus (100) for glass slabs according to claim 1, **characterized in that** the winding/unwinding means (12) are composed of two or more reels (12), on each of which a spacing wire (15) is wound.

5. Process of separating glass slabs with a separating apparatus (100) for glass slabs according to any one of the previous claims, **characterized in that** it comprises the following steps:
- a first step (1, 2, 3) wherein the winding/unwinding means (12) are lifted by the actuating means (31) in an upper position, which allows passing the glass slab (21) to be stored below the winding/unwinding means (12) during its loading operations, while the spacing wire (15) is kept taut between the fastening means (27) and the winding/unwinding means (12) and in contact with the glass slab (21), till the first glass slab (21) is stored;
- a second step (4, 5, 6, 7) wherein the winding/unwinding means (12) are lowered by the actuating means (31) in a lower position, which allows passing the glass slab (21) to be stored above the winding/unwinding means (12) during its storage operations, while the spacing wire (15) is kept taut between the first loaded glass slab (21) and the winding/unwinding means (12) and in contact with the second glass slab (21) to be loaded, till the second glass slab (21) is stored with the spacing wire (15) interposed between the glass slabs (21);
- a third step (8, 9, 10, 11) wherein the winding/unwinding means (12) are lifted by the actuating means (31) in an upper position, which allows passing the glass slab (21) to be stored below the winding/unwinding means (12) during its storage operations, while the spacing wire (15) is kept taut between the glass slab (21) loaded in the previous step and the winding/unwinding means (12) and in contact with the glass slab (21) to be loaded, till this glass slab (21) is stored with the spacing wire (15) interposed between the glass slabs (21);
- following steps, in which the second step and the third step are alternated till the end of the loading operations of the glass slabs (21).

6. Process according to claim 5, **characterized in that** the first step of the process comprises:
- a sub-step (1) wherein the reels (12) are lowered by the actuating means (31) in the lower position and the glass slab (21) to be stored is moved towards a rack (30) for storing slabs comprising the base support (22) and a side support (23), till one gets in contact with the two spacing wires (15) taut between the fastening means (27) and the respective reels (12);
- a sub-step (2) wherein the glass slab (21) to be stored is moved towards the side support (23) keeping the two spacing wires (15) in contact with the glass slab (21) in order to unwind the wires (15) due to the action of the clutch connected to the reel (12);
- a sub-step (3) wherein the glass slab (21) to be stored is loaded on the rack (30) abutted onto the base support (22) and onto the side support (23), keeping the two spacing wires (15) interposed between the glass slab (21) and the base support (22) and the side support (23);
and **characterized in that** the second step of the process comprises:
- a sub-step (4) wherein the reels (12) are lowered by the actuating means (31) in the lower position;
- a sub-step (5) wherein the glass slab (21) to be stored is moved towards the rack (30) for storing slabs till one gets in contact with the two spacing wires (15) taut between the first stored glass slab (21) and the respective reels (12);
- a sub-step (6) wherein the glass slab (21) to be stored is moved towards the side support (23) keeping the two spacing wires (15) in contact with the glass slab (21) to be stored, in order to unwind the wires (15) due to the action of the clutch connected to the reel (12);
- a sub-step (7) wherein the glass slab (21) to be stored is loaded on the rack (30), and the glass slab (21) to be stored abutted onto the first stored glass slab (21), keeping the two spacing wires (15) interposed between the glass slabs (21) and the base support (22) and the side support (23), and between the adjacent glass slabs (21);
and **characterized in that** the third step of the process comprises:
- a sub-step (8) wherein the reels (12) are lifted by the actuating means (31) in the upper position;
- a sub-step (9) wherein the glass slab (21) to be stored is moved towards the rack (30) for storing slabs till one gets in contact with the two spacing wires (15) taut between the glass slab (21) stored in the previous step and the respective reels (12);
- a sub-step (10) wherein the glass slab (21) to be stored is moved towards the side support (23) keeping the two spacing wires (15) in contact with the glass slab (21) to be stored, in order to unwind the wires (15) due to the action of the clutch connected to the reel (12);
- a sub-step (11) wherein the glass slab (21) to be stored is loaded on the rack (30) abutted onto the base support (22) and onto the stored glass slab (21), keeping the two spacing wires (15) interposed between the glass slabs (21) and the base support (22) and the side support (23), and between the adjacent glass slabs (21).

## Patentansprüche

1. Trennvorrichtung (100) für Glasplatten, Folgendes umfassend:
- eine Stützstruktur (14),
- eine Auf-/Abwickeleinrichtung (12) eines Abstandsdrahts (15) zum Beabstanden der Glasplatten (21),
- eine Hebeeinrichtung (38), die mit der Stützstruktur (14) und mit der Auf-/Abwickeleinrichtung (12) verbunden und dazu ausgelegt ist, die Auf-/Abwickeleinrichtung (12) zwischen einer unteren Position und einer oberen Position anzuheben/abzusenken, um den Abstandsdraht (15) während Lagerungsvorgängen von aneinander anliegenden Glasplatten (21) mit einer Glasplatte (21) in Kontakt zu halten, um deren Lagerung durch mindestens einen zwischen zwei angrenzenden Glasplatten (21) angeordneten Abstandsdraht (15) getrennt zuzulassen,
wobei die Auf-/Abwickeleinrichtung (12) aus mindestens einer Spule (12) besteht, die mit der Hebeeinrichtung (38) drehbar verbunden ist; und
wobei die Hebeeinrichtung (38) aus einer schwingenden Stütze (38) zusammengesetzt ist, die zwei Arme (18) umfasst, die durch eine erste Drehwelle (35) der Stütze (38) und durch eine zweite Drehwelle (36) der Spulen (12) miteinander verbunden sind, wobei die Wellen (35, 36) quer zu den Armen (18) verlaufen, wobei die Trennvorrichtung **dadurch gekennzeichnet ist, dass** sie Folgendes umfasst:
- eine Befestigungseinrichtung (27) für ein Ende des Abstandsdrahts (15),
- eine Stellgliedeinrichtung (31), die von einem Steuerungssystem gesteuert wird und dazu ausgelegt ist, die Auf-/Abwickeleinrichtung (12) und die Hebeeinrichtung (38) zu betätigen, um den Abstandsdraht (15) zwischen der Befestigungseinrichtung (27) und der Auf-/Abwickeleinrichtung (12) gespannt zu halten, und
- eine Kupplungseinrichtung (16), die der Auf-/Abwickeleinrichtung (12) zugeordnet und dazu ausgestaltet ist, die Rückgewinnung des Abstandsdrahts (15) beim Wiederaufwickeln zuzulassen, wobei die Kupplungseinrichtung eine Kupplung umfasst, die mit der Spule (12) verbunden und dazu ausgelegt ist, den Abstandsdraht (15) beim Wiederaufwickeln rückzugewinnen.

2. Trennvorrichtung (100) für Glasplatten nach Anspruch 1, **dadurch gekennzeichnet, dass** die Auf-/Abwickeleinrichtung (12) und die Hebeeinrichtung (38) dazu ausgelegt sind, die Glasplatten (21) durch zwei Abstandsdrähte (15), die zwischen zwei angrenzenden Glasplatten (21) angeordnet sind, voneinander getrennt zu lagern.

3. Trennvorrichtung (100) für Glasplatten nach Anspruch 1 oder 2, **dadurch gekennzeichnet, dass** die Stützstruktur (14) einer Bodenstütze (22) zugeordnet ist, die dazu ausgelegt ist, die daran anliegenden Glasplatten (21) abzustützen, und das Ende des Abstandsdrahts (15) durch die Befestigungseinrichtung (27) an der Bodenstütze (22) befestigt ist, um den Abstandsdraht (15) zwischen der Bodenstütze (22) und der Auf-/Abwickeleinrichtung (12) gespannt zu halten, bevor die erste Platte (21) auf die Bodenstütze (22) geladen wird.

4. Trennvorrichtung (100) für Glasplatten nach Anspruch 1, **dadurch gekennzeichnet, dass** die Auf-/Abwickeleinrichtung (12) aus zwei oder mehreren Spulen (12) besteht, um welche jeweils ein Abstandsdraht (15) gewickelt ist.

5. Verfahren zum Trennen von Glasplatten mit einer Trennvorrichtung (100) für Glasplatten nach einem der vorstehenden Ansprüche, **dadurch gekennzeichnet, dass** es die folgenden Schritte umfasst:
- einen ersten Schritt (1, 2, 3), in dem die Auf-/Abwickeleinrichtung (12) von der Stellgliedeinrichtung (31) in eine obere Position angehoben wird, wodurch zugelassen wird, dass die zu lagernde Glasplatte (21) während des Ladevorgangs unter der Auf-/Abwickeleinrichtung (12) hindurchgeführt wird, während der Abstandsdraht (15) zwischen der Befestigungseinrichtung (27) und der Auf-/Abwickeleinrichtung (12) gespannt und mit der Glasplatte (21) in Kontakt gehalten wird, bis die erste Glasplatte (21) eingelagert ist;
- einen zweiten Schritt (4, 5, 6, 7)**,** in dem die Auf-/Abwickeleinrichtung (12) von der Stellgliedeinrichtung (31) in eine untere Position abgesenkt wird, wodurch zugelassen wird, dass die zu lagernde Glasplatte (21) während des Lagervorgangs über der Auf-/Abwickeleinrichtung (12) hindurchgeführt wird, während der Abstandsdraht (15) zwischen der ersten geladenen Glasplatte (21) und der Auf-/Abwickeleinrichtung (12) und mit der zweiten zu ladenden Glasplatte (21) in Kontakt gehalten wird, bis die zweite Glasplatte (21) eingelagert ist, wobei der Abstandsdraht (15) zwischen den Glasplatten (21) angeordnet ist;
- einen dritten Schritt (8, 9, 10, 11), in dem die Auf-/Abwickeleinrichtung (12) von der Stellgliedeinrichtung (31) in eine obere Position angehoben wird, wodurch zugelassen wird, dass die zu lagernde Glasplatte (21) während des Lagervorgangs unter der Auf-/Abwickeleinrichtung (12) hindurchgeführt wird, während der Abstandsdraht (15) zwischen der im vorherigen Schritt geladenen Glasplatte (21) und der Auf-/Abwickeleinrichtung (12) gespannt und mit der zu ladenden Glasplatte (21) in Kontakt gehalten wird, bis die Glasplatte (21) eingelagert ist, wobei der Abstandsdraht (15) zwischen den Glasplatten (21) angeordnet ist;
- nachfolgende Schritte, in denen der zweite Schritt und der dritte Schritt bis zum Ende des Ladevorgangs der Glasplatten (21) abwechselnd durchgeführt werden.

6. Verfahren nach Anspruch 5, **dadurch gekennzeichnet, dass** der erste Schritt des Verfahrens Folgendes umfasst:
- einen Teilschritt (1), in dem die Spulen (12) von der Stellgliedeinrichtung (31) in die untere Position abgesenkt werden und die zu lagernde Glasplatte (21) zu einem Regal (30) zum Lagern von Platten, das die Bodenstütze (22) und eine Seitenstütze (23) umfasst, bewegt wird, bis sie die zwei Abstandsdrähte (15) berührt, die zwischen der Befestigungseinrichtung (27) und der jeweiligen Spule (12) gespannt sind;
- einen Teilschritt (2), in dem die zu lagernde Glasplatte (21) zur Seitenstütze (23) bewegt wird, wobei die zwei Abstandsdrähte (15) mit der Glasplatte (21) in Kontakt gehalten werden, um die Drähte (15) durch die Wirkung der mit der Spule (12) verbundenen Kupplung abzuwickeln;
- einen Teilschritt (3), in dem die zu lagernde Glasplatte (21) an die Bodenstütze (22) und die Seitenstütze (23) anliegend auf das Regal (30) geladen wird, wobei die zwei Abstandsdrähte (15) zwischen der Glasplatte (21) und der Bodenstütze (22) und der Seitenstütze (23) angeordnet bleiben;
und **dadurch gekennzeichnet, dass** der zweite Schritt des Verfahrens Folgendes umfasst:
- einen Teilschritt (4), in dem die Spulen (12) von der Stellgliedeinrichtung (31) in die untere Position abgesenkt werden;
- einen Teilschritt (5), in dem die zu lagernde Glasplatte (21) zum Regal (30) zum Lagern von Platten bewegt wird, bis sie die zwei Abstandsdrähte (15) berührt, die zwischen der ersten gelagerten Glasplatte (21) und der jeweiligen Spule (12) gespannt sind;
- einen Teilschritt (6), in dem die zu lagernde Glasplatte (21) zur Seitenstütze (23) bewegt wird, wobei die zwei Abstandsdrähte (15) mit der zu lagernden Glasplatte (21) in Kontakt gehalten werden, um die Drähte (15) durch die Wirkung der mit der Spule (12) verbundenen Kupplung abzuwickeln;
- einen Teilschritt (7), in dem die zu lagernde Glasplatte (21) auf das Regal (30) geladen wird und die zu lagernde Glasplatte (21) an der ersten gelagerten Glasplatte (21) anliegt, wobei die zwei Abstandsdrähte (15) zwischen den Glasplatten (21) und der Bodenstütze (22) und der Seitenstütze (23) und zwischen den angrenzenden Glasplatten (21) angeordnet bleiben;
und **dadurch gekennzeichnet, dass** der dritte Schritt des Verfahrens Folgendes umfasst:
- einen Teilschritt (8), in dem die Spulen (12) von der Stellgliedeinrichtung (31) in die obere Position angehoben werden;
- einen Teilschritt (9), in dem die zu lagernde Glasplatte (21) zum Regal (30) zum Lagern von Platten bewegt wird, bis sie die zwei Abstandsdrähte (15) berührt, die zwischen der im vorherigen Schritt gelagerten Glasplatte (21) und der jeweiligen Spule (12) gespannt sind;
- einen Teilschritt (10), in dem die zu lagernde Glasplatte (21) zur Seitenstütze (23) bewegt wird, wobei die zwei Abstandsdrähte (15) mit der zu lagernden Glasplatte (21) in Kontakt gehalten werden, um die Drähte (15) durch die Wirkung der mit der Spule (12) verbundenen Kupplung abzuwickeln;
- einen Teilschritt (11), in dem die zu lagernde Glasplatte (21) an die Bodenstütze (22) und die gelagerte Glasplatte (21) anliegend auf das Regal (30) geladen wird, wobei die zwei Abstandsdrähte (15) zwischen den Glasplatten (21) und der Bodenstütze (22) und der Seitenstütze (23) und zwischen den angrenzenden Glasplatten (21) angeordnet bleiben.

## Revendications

1. Appareil de séparation (100) pour des plaques de verre, comprenant :
- une structure de support (14),
- des moyens d'enroulement/de déroulement (12) d'un fil d'espacement (15) pour espacer les plaques de verre (21),
- des moyens de levage (38) raccordés à la structure de support (14) et aux moyens d'enroulement/de déroulement (12) et conçus pour élever/abaisser les moyens d'enroulement/de déroulement (12) entre une position basse et une position haute, afin de maintenir le fil d'espacement (15) en contact avec une plaque en verre (21) lors des opérations d'entreposage de plaques de verre (21) en appui les unes contre les autres, pour permettre de les entreposer séparées par au moins un fil d'espacement (15) interposé entre deux plaques de verre (21) adjacentes,
les moyens d'enroulement/de déroulement (12) étant composés d'au moins une bobine (12) raccordée à rotation aux moyens de levage (38) ; et
les moyens de levage (38) étant composés d'un support oscillant (38) comprenant deux bras (18) raccordés par un premier arbre de rotation (35) du support (38) et par un second arbre de rotation (36) des bobines (12), lesdits arbres (35, 36) étant transversaux aux bras (18), ledit appareil de séparation étant **caractérisé en ce qu'**il comprend :
- des moyens de fixation (27) d'une extrémité du fil d'espacement (15),
- des moyens d'actionnement (31) commandés par un système de commande et conçus pour actionner les moyens d'enroulement/de déroulement (12) et les moyens de levage (38) afin de maintenir le fil d'espacement (15) tendu entre les moyens de fixation (27) et les moyens d'enroulement/de déroulement (12), et
- des moyens d'embrayage (16) associés aux moyens d'enroulement/de déroulement (12) et conçus pour permettre la récupération du fil d'espacement (15) lors de son enroulement, les moyens d'embrayage comprenant un embrayage raccordé à la bobine (12) et conçu pour récupérer le fil d'espacement (15) lors de son enroulement.

2. Appareil de séparation (100) pour des plaques de verre selon la revendication 1, **caractérisé en ce que** les moyens d'enroulement/de déroulement (12) et les moyens de levage (38) sont conçus pour entreposer les plaques de verre (21) mutuellement séparées par deux fils d'espacement (15) interposés entre deux plaques de verre (21) adjacentes.

3. Appareil de séparation (100) pour des plaques de verre selon la revendication 1 ou 2, **caractérisé en ce que** la structure de support (14) est associée à un support de base (22) conçu pour supporter les plaques de verre (21) en appui sur celui-ci, et l'extrémité du fil d'espacement (15) est fixée par les moyens de fixation (27) au support de base (22), afin de maintenir le fil d'espacement (15) tendu entre le support de base (22) et les moyens d'enroulement/de déroulement (12), avant le chargement de la première plaque (21) sur le support de base (22).

4. Appareil de séparation (100) pour des plaques de verre selon la revendication 1, **caractérisé en ce que** les moyens d'enroulement/de déroulement (12) sont composés d'au moins deux bobines (12), sur chacune desquelles est enroulé un fil d'espacement (15).

5. Procédé de séparation de plaques de verre au moyen d'un appareil de séparation (100) pour des plaques de verre selon l'une quelconque des revendications précédentes, **caractérisé en ce qu'**il comprend les étapes suivantes :
- une première étape (1, 2, 3) dans laquelle les moyens d'enroulement/de déroulement (12) sont élevés par les moyens d'actionnement (31) jusqu'à une position haute, ceci permettant de passer la plaque de verre (21) à entreposer sous les moyens d'enroulement/de déroulement (12) lors de ses opérations de chargement, tandis que le fil d'espacement (15) est maintenu tendu entre les moyens de fixation (27) et les moyens d'enroulement/de déroulement (12) et en contact avec la plaque de verre (21), jusqu'à ce que la première plaque de verre (21) soit entreposée ;
- une deuxième étape (4, 5, 6, 7) dans laquelle les moyens d'enroulement/de déroulement (12) sont abaissés par les moyens d'actionnement (31) jusqu'à une position basse, ceci permettant de passer la plaque de verre (21) à entreposer au-dessus des moyens d'enroulement/de déroulement (12) lors de ses opérations d'entreposage, tandis que le fil d'espacement (15) est maintenu tendu entre la première plaque de verre (21) chargée et les moyens d'enroulement/de déroulement (12) et en contact avec la deuxième plaque de verre (21) à charger, jusqu'à ce que la deuxième plaque de verre (21) soit entreposée avec le fil d'espacement (15) interposé entre les plaques de verre (21) ;
- une troisième étape (8, 9, 10, 11) dans laquelle les moyens d'enroulement/de déroulement (12) sont élevés par les moyens d'actionnement (31) jusqu'à une position haute, ceci permettant de passer la plaque de verre (21) à entreposer sous les moyens d'enroulement/de déroulement (12) lors de ses opérations d'entreposage, tandis que le fil d'espacement (15) est maintenu tendu entre la plaque de verre (21) chargée à l'étape précédente et les moyens d'enroulement/de déroulement (12) et en contact avec la plaque de verre (21) à charger, jusqu'à ce que cette plaque de verre (21) soit entreposée avec le fil d'espacement (15) interposé entre les plaques de verre (21) ;
- des étapes suivantes, dans lesquelles la deuxième étape et la troisième étape sont alternées jusqu'à la fin des opérations de chargement des plaques de verre (21).

6. Procédé selon la revendication 5, **caractérisé en ce que** la première étape du procédé comprend :
- une sous-étape (1) dans laquelle les bobines (12) sont abaissées par les moyens d'actionnement (31) jusqu'à la position basse et la plaque de verre (21) à entreposer est déplacée en direction d'un bâti (30) pour l'entreposage de plaques comprenant le support de base (22) et un support latéral (23), jusqu'à ce que l'une entre en contact avec les deux fils d'espacement (15) tendus entre les moyens de fixation (27) et les bobines (12) respectives ;
- une sous-étape (2) dans laquelle la plaque de verre (21) à entreposer est déplacée en direction du support latéral (23) en maintenant les deux fils d'espacement (15) en contact avec la plaque de verre (21) afin de dérouler les fils (15) du fait de l'action de l'embrayage raccordé à la bobine (12) ;
- une sous-étape (3) dans laquelle la plaque de verre (21) à entreposer est chargée sur le bâti (30) en appui sur le support de base (22) et sur le support latéral (23), en maintenant les deux fils d'espacement (15) interposés entre la plaque de verre (21) et le support de base (22) et le support latéral (23) ;
et **caractérisé en ce que** la deuxième étape du procédé comprend :
- une sous-étape (4) dans laquelle les bobines (12) sont abaissées par les moyens d'actionnement (31) jusqu'à la position basse ;
- une sous-étape (5) dans laquelle la plaque de verre (21) à entreposer est déplacée en direction du bâti (30) pour l'entreposage de plaques jusqu'à ce que l'une entre en contact avec les deux fils d'espacement (15) tendus entre la première plaque de verre (21) entreposée et les bobines (12) respectives ;
- une sous-étape (6) dans laquelle la plaque de verre (21) à entreposer est déplacée en direction du support latéral (23) en maintenant les deux fils d'espacement (15) en contact avec la plaque de verre (21) à entreposer, afin de dérouler les fils (15) du fait de l'action de l'embrayage raccordé à la bobine (12) ;
- une sous-étape (7) dans laquelle la plaque de verre (21) à entreposer est chargée sur le bâti (30), et la plaque de verre (21) à entreposer mise en appui sur la première plaque de verre (21) entreposée, en maintenant les deux fils d'espacement (15) interposés entre les plaques de verre (21) et le support de base (22) et le support latéral (23), et entre les plaques de verre (21) adjacentes ;
et **caractérisé en ce que** la troisième étape du procédé comprend :
- une sous-étape (8) dans laquelle les bobines (12) sont élevées par les moyens d'actionnement (31) jusqu'à la position haute ;
- une sous-étape (9) dans laquelle la plaque de verre (21) à entreposer est déplacée en direction du bâti (30) pour l'entreposage de plaques jusqu'à ce que l'une entre en contact avec les deux fils d'espacement (15) tendus entre la plaque de verre (21) entreposée à l'étape précédente et les bobines (12) respectives ;
- une sous-étape (10) dans laquelle la plaque de verre (21) à entreposer est déplacée en direction du support latéral (23) en maintenant les deux fils d'espacement (15) en contact avec la plaque de verre (21) à entreposer, afin de dérouler les fils (15) du fait de l'action de l'embrayage raccordé à la bobine (12) ;
- une sous-étape (11) dans laquelle la plaque de verre (21) à entreposer est chargée sur le bâti (30) en appui sur le support de base (22) et sur la plaque de verre (21) entreposée, en maintenant les deux fils d'espacement (15) interposés entre les plaques de verre (21) et le support de base (22) et le support latéral (23), et entre les plaques de verre (21) adjacentes.
